(19) Europäisches Patentamt
European Patent Office
Office européen des brevets

(11) **EP 2 706 101 A1**

(12) **EUROPEAN PATENT APPLICATION**

(43) Date of publication:
**12.03.2014 Bulletin 2014/11**

(51) Int Cl.:
***C09J 7/02*** (2006.01)   ***C09J 133/08*** (2006.01)
***C08K 7/22*** (2006.01)

(21) Application number: **13182956.6**

(22) Date of filing: **04.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.09.2012 JP 2012195846**

(71) Applicant: **NITTO DENKO CORPORATION**
**Ibaraki-shi, Osaka 567-8680 (JP)**

(72) Inventors:
• **Higuchi, Naoaki**
  **Ibaraki-shi, Osaka 567-8680 (JP)**
• **Yamanaka, Eiji**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(54) **DOUBLE-SIDED PRESSURE-SENSITIVE ADHESIVE SHEET**

(57)   An object of the present invention provides a double-sided pressure-sensitive adhesive sheet that has large push-out adhesive force and high impactproof reliability.

The double-sided pressure-sensitive adhesive sheet includes a pressure-sensitive adhesive layer. The pressure-sensitive adhesive layer is substantially free of bubbles and includes an acrylic polymer (A), an acrylic polymer (B) having a weight-average molecular weight of equal to or more than 1,000 and less than 30,000, and hollow microspheres (C).

FIG.1

**Description**

TECHNICAL FIELD

The present disclosure relates to a double-sided pressure-sensitive adhesive sheet.

BACKGROUND

Double-sided pressure-sensitive adhesive sheets have been widely used in various fields. For examples, double-sided pressure-sensitive adhesive sheets are used to fix members installed in portable electronic devices such as mobile phones and handheld terminals. For example, Patent Documents 1 and 2 disclose that a protective panel (or a lens) for protecting a display of a portable electronic device is fixed to a chassis by a double-sided pressure-sensitive adhesive sheet. The double-sided pressure-sensitive adhesive sheet is sandwiched between the protective panel and the chassis and attached to the protective panel and the chassis. As a result, the protective panel is fixed to the chassis.

When double-sided pressure-sensitive adhesive sheets are used to fix members installed in portable electronic devices, adhesive force to properly maintain the fixation of the members is required not only when the portable electronic devices are in normal conditions without any damages but also when the portable electronic devices are deformed by external forces. The members in electronic devices may be deformed when users sit in chairs while the electronic devices in their back pockets and press down the electronic device with their hips. Even in such a case, the double-sided pressure-sensitive adhesive sheets are expected to maintain the fixation of the members. Namely, the double-sided pressure-sensitive adhesive sheets are expected to have adhesive forces to maintain the fixation even when the members in the portable electronic devices are deformed.

In recent years, the members to be fixed by the double-sided pressure-sensitive adhesive sheets increase in size, because displays of portable electronic devices increase in size. In other words, the members to be fixed by the double-sided pressure-sensitive adhesive sheets are increasing in mass in recent years. Contrary to the increase in size of the members, the double-sided pressure-sensitive adhesive sheets tend to have smaller adhesive area (fixation area) to improve appearance of the portable electronic devices. Therefore, the double-sided pressure-sensitive adhesive sheets are expected to have sufficient adhesive force with small adhesive area. Under such circumstance, such double-sided pressure-sensitive adhesive sheets are expected to have higher adhesive force in recent years.

In addition to the adhesive forces described above, as described in Patent Documents 1 and 2, the double-sided pressure-sensitive adhesive sheets are expected to have impactproof reliability. The impactproof reliability is another adhesive ability with which the double-sided pressure-sensitive adhesive sheets maintain the fixation of the members even when large instantaneous impacts are applied to the portable electronic devices when dropped. Double-sided pressure-sensitive adhesive sheets that have not only impactproof reliability but also high strength of adhesive force have not been provided yet.

Japanese Unexamined Patent Application Publication No. 2009-108314 Japanese Unexamined Patent Application Publication No. 2005-187513

SUMMARY

Objects of technologies described herein include, but not limited to, solving problems of known double-sided pressure-sensitive adhesive sheets. The technologies described herein provide double-sided pressure-sensitive adhesive sheets that can have large push-out adhesive forces and high impactproof reliability.

The inventors of the present invention conducted an intensive study and found that the following double-sided pressure-sensitive adhesive sheet has not only large push-out adhesive force, but also high impactproof reliability. The double-sided pressure-sensitive adhesive sheet includes a pressure-sensitive adhesive layer. The pressure-sensitive adhesive layer is substantially free of bubbles and includes an acrylic polymer (A), an acrylic polymer (B) having a weight-average molecular weight of equal to or more than 1,000 and less than 30,000, and hollow microspheres (C).

In the double-sided pressure-sensitive adhesive sheet, the pressure-sensitive adhesive layer may include the acrylic polymer (B) in an amount of 5 to 50 parts by mass, based on 100 parts by mass of the acrylic polymer (A).

In the double-sided pressure-sensitive adhesive sheet, the pressure-sensitive adhesive layer may include the hollow microspheres (C) in an amount of 0.1 to 15 parts by mass, based on 100 parts by mass of the acrylic polymer (A).

In the double-sided pressure-sensitive adhesive sheet, the acrylic polymer (B) may include (meth)acrylic acid ester (b1) as a monomer component.

In the double-sided pressure-sensitive adhesive sheet, the acrylic polymer (A) may include (meth)acrylic acid alkyl ester (a1) and a polar group-containing copolymerizable monomer (a2) with polymerizable unsaturated double bond as monomer components. The (meth)acrylic acid alkyl ester (a1) may include any one of a linear-chain alkyl group with a carbon number of 1 to 20 and a branched-chain alkyl group with a carbon number of 1 to 20.

In the double-sided pressure-sensitive adhesive sheet, the pressure-sensitive adhesive layer may have a content of bubbles equal to or less than 3% by volume.

In the double-sided pressure-sensitive adhesive sheet, the pressure-sensitive adhesive layer may have a thickness of 90 $\mu$m to 3,000 $\mu$m.

In the double-sided pressure-sensitive adhesive sheet, the double-sided pressure-sensitive adhesive sheet has a push-out adhesive force equal to or larger than 30 N/cm$^2$.

According to aspects of the present invention, the problems of known double-sided pressure-sensitive adhesive sheets can be resolved and double-sided pressure-sensitive adhesive sheets having large push-out adhesive forces and high impactproof reliability can be provided.

BRIEF DESCRIPTION OF DRAWINGS

FIG. 1 is a schematic cross-sectional view of a double-sided pressure-sensitive adhesive sheet according to an embodiment.

FIG. 2 is a schematic top view of a sample used for measuring a push-out adhesive force.

FIG. 3 is a cross-sectional view of the sample in FIG. 2 cut along a line A-A.

FIG. 4 is a schematic cross-sectional view illustrating a method of measuring the push-out adhesive force.

FIG. 5 is a schematic top view of a sample used for evaluating impactproof reliability.

FIG. 6 is a cross-sectional view of the sample in FIG. 5 cut along a line B-B.

FIG. 7 is a schematic cross-sectional view illustrating a method of evaluating the impactproof reliability.

DETAILED DESCRIPTION

A double-sided pressure-sensitive adhesive sheet includes at least one pressure-sensitive acrylic adhesive layer (hereinafter may be referred to as a pressure-sensitive adhesive layer). A double-sided pressure-sensitive adhesive sheet may be called by different terms such as a double-sided adhesive tape and a double-sided adhesive film. In this specification, the term "double-sided pressure-sensitive adhesive sheet" will be used throughout the text. A surface of the pressure-sensitive adhesive layer of the double-sided pressure-sensitive adhesive sheet may be referred to as a pressure-sensitive adhesive surface.

The double-sided pressure-sensitive adhesive sheet may be a substrate-less double-sided pressure-sensitive adhesive sheet that does not include a substrate (or a base member) or a double-sided pressure-sensitive adhesive sheet with substrate that includes a substrate. The substrate-less double-sided pressure-sensitive adhesive sheet includes pressure-sensitive adhesive layers without a base member. The double-sided pressure-sensitive adhesive sheet with substrate includes a substrate and pressure-sensitive adhesive layers on both surfaces of the substrate.

The double-sided pressure-sensitive adhesive sheet can include other layers (e.g., an intermediate layer and an undercoat) as long as the double-sided pressure-sensitive adhesive sheet is within a scope of the technology described herein. In this embodiment, a substrate-less double-sided pressure-sensitive adhesive sheet including only pressure-sensitive adhesive layers is used because the substrate-less double-sided pressure-sensitive adhesive sheet is more likely to exert a large push-out adhesive force and high impactproof reliability. A pressure-sensitive adhesive layer of the double-sided pressure-sensitive adhesive sheet will be explained.

Pressure-sensitive acrylic adhesive layer

The pressure-sensitive adhesive layer is a layer that provides pressure-sensitive adhesive surfaces of the double-sided pressure-sensitive adhesive sheet The pressure-sensitive adhesive layer mainly includes an acrylic polymer (A), an acrylic polymer (B), and hollow microspheres (C) The pressure-sensitive adhesive layer is substantially free of bubbles In the pressure-sensitive adhesive layer, the acrylic polymer (A), the acrylic polymer (B), and the hollow microspheres (C) are in a mixed state. The pressure-sensitive adhesive layer may contain other components as necessary. Hereinafter, the components (A) to (C) and other components will be explained

Acrylic Polymer (A)

The pressure-sensitive adhesive layer includes the acrylic polymer (A) as a base polymer (main component). The acrylic polymer (A) is a polymer of monomers (a) for polymer (A) For example, at least two kinds of monomers are used as the monomers (a) for polymer (A) as will be described later. During the preparation of the (acrylic polymer (A), the monomers (a) for polymer (A) are used in the form of composition of the monomers (a) for polymer (A) (hereinafter referred to as a monomer composition).

The monomers (a) for polymer (A) may contain (meth)acrylic acid alkyl ester (a1) including any one of a linear-chain alkyl group with a carbon number of 1 to 20 and a branched-chain alkyl group with a carbon number of 1 to 20 (hereinafter referred to as (meth)acrylic acid alkyl ester (a1)) and a copolymerizable monomer (a2) that is one kind of copolymerizable monomers and at least having one kind of polar groups with polymerizable unsaturated double bond (hereinafter referred to as a polar group-containing copolymerizable monomer (a2).

A composition ratio of the (meth)acrylic acid alkyl ester (a1) and the polar group-containing copolymerizable monomer (a2) in the monomer composition is such that the polar group-containing copolymerizable monomer (a2) is contained in the monomer composition preferably in an amount of 5 to 15 parts by mass, more preferably in an amount of 7 to 12 parts by mass, further preferably in an amount of 9 to 11, based on the total mass (100 parts by mass) of the (meth)acrylic acid alkyl ester (a1) and the polar group-containing copolymerizable monomer (a2) When the polar group-containing copolymerizable monomer (a2) is contained in the monomer composition in the amount of 5 to 15 parts by mass, based on the total mass, not only large push-out adhesive force, but also high impactproof reliability of the double-sided pressure-sensitive adhesive sheet are provided.

A percentage of a total amount of the (meth)acrylic acid alkyl ester (a1) and the polar group-containing copolymerizable monomer (a2) is not particularly limited, but preferably equal to or more than 50% by mass, more preferably equal to or more than 75% by mass, further more preferably equal to or more than 90% by mass, still further more preferably equal to more than 95% by mass, based on a total mass of all monomer components used for forming the acrylic polymer (A). The upper limit of the percentage is not particularly limited as long as it is equal to or less than 100% by mass.

Examples of the (meth)acrylic acid alkyl ester (a1) include (meth)acrylic acid methyl, (meth)acrylic acid ethyl, (meth)acrylic acid propyl, (meth)acrylic acid isopropyl, (meth)acrylic acid n-butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl. The (meth)acrylic acid alkyl ester (a1) compounds can be used alone or in a combination of two or more kinds. In this specification, the term "(meth)acrylic" expresses acrylic and/or methacrylic (i.e., any one of or both of acrylic and methacrylic).

A (meth)acrylic acid alkyl ester including an alkyl group with a carbon number of 1 to 14 may be preferred for the (meth)acrylic acid alkyl ester (a1). An acrylic acid n-butyl (BA), acrylic acid 2-ethylhexyl (2EHA), acrylic acid isooctyl, and acrylic acid isononyl may be more preferred.

Examples of the polar group-containing copolymerizable monomer (a2) include: carboxyl group-containing monomers such as (meth)acrylic acid, itaconic acid, maleic acid, fumaric acid, crotonic acid, isocrotonic acid, and anhydrides of these acids (acid anhydride group-containing monomers, e g , maleic anhydride and itaconic anhydride); hydroxyl group-containing monomers such as (meth)acrylic acid 2-hydroxyethyl, (meth)acrylic acid 3-hydroxypropyl, (meth)acrylic acid 4-hydroxybutyl, (meth)acrylic acid 6-hydroxyhexyl, vinyl alcohol, and allyl alcohol, amide group-containing monomers such as (meth)acrylamide, N,N-dimethyl(meth)acrylamide, N-methylol(meth)acrylamide, N-methoxymethyl(meth)acrylamide, N-butoxymethyl(meth)acrylamide, and N-hydroxyethyl(meth)acrylamide; amino group-containing monomers such as (meth)acrylic acid aminoethyl, (meth)acrylic acid dimethylaminoethyl, and (meth)acrylic acid t-butylaminoethyl; epoxy group-containing monomers such as (meth)acrylic acid glycidyl, and (meth)acrylic acid methylglycidyl; cyano group-containing monomers such as acrylonitrile, and methacrylonitrile; heterocycle-containing vinyl monomers such as N-vinyl-2-pyrrolidone, (meth)acryloyl morpholine, N-vinylpiperidone, N-vinylpiperazine, N-vinylpyrrole, and N-vinylimidazole, sulfonate group-containing monomers such as vinyl sulfonate sodium; phosphate group-containing monomers such as 2-hydroxyethyl acryloyl phosphate, imide group-containing monomers such as cyclohexyl maleimide and isopropylmaleimide; and isocyanate group-containing monomers such as 2-methacryloyloxyethyl isocyanate The polar group-containing copolymerizable monomer (a2) may be used alone or in a combination of two or more kinds

Preferable example of the polar group-containing copolymerizable monomer (a2) includes the carboxyl group-containing monomer and the hydroxyl group-containing monomer, and more preferable examples thereof includes acrylic acid (AA), acrylic acid 2-hydroxyethyl ester (HEA), and acrylic acid 4-hydroxybutyl (4HBA) may be more preferred

The acrylic polymer (A) may contain polyfunctional monomers (a3) that is one kind of copolymerizable monomers and have at least two polymerizable functional groups with unsaturated double bonds as the monomer component (hereinafter referred to as polyfunctional monomers (a3))

Examples of the polyfunctional monomers (a3) include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, and urethane acrylate. The polyfunctional monomers (a3) can be used alone or in a combination of two or more kinds. Polyfunctional (meth)acrylates may be preferred for the polyfunctional monomers (a3)

The amount of the polyfunctional monomers (a3) is varied according to the molecular weight thereof or the number of functional groups. The amount of the polyfunctional monomers (a3) is preferably from 0.01 to 2% by mass, more preferably from 0 02 to 1% by mass, based on a total mass of all monomer components used for forming the acrylic polymer (A) When the amount of the polyfunctional monomers (a3) is equal to or more than 0.01% by mass, the pressure-sensitive adhesive layer is provided with sufficient level of cohesion. When the amount of the polyfunctional monomers (a3) is less than 2% by mass, the pressure-sensitive adhesive layer is less likely to be too hard, and thus push-out adhesive force and impactproof reliability of the double-sided pressure-sensitive adhesive sheet are less likely to decrease

When the polyfunctional monomers (a3) are used as monomer components included in the acrylic polymer (A) (monomers (a) for polymer (A)), higher cohesion in the pressure-sensitive adhesive layer and higher adhesive force can be provided, because the acrylic polymer (A) contains a cross-linking acrylic polymer

Copolymerizable monomers other than polyfunctional monomers (a3) may be used for the monomer components for the acrylic polymer (A) Examples of the copolymerizable monomers include: (meth)acrylic acid esters having an alicyclic hydrocarbon group such as cyclopentyl(meth)acrylate, cyclohexyl(meth)acrylate, and isobornyl(meth)acrylate; (meth)acrylic acid esters having an aromatic hydrocarbon group such as phenyl(meth)acrylate, which are different from the (meth)acrylic acid alkyl ester (a1); vinyl esters such as vinyl acetate and vinyl propionate; aromatic vinyl compounds such as styrene and vinyl toluene; olefins or dienes such as ethylene, butadiene, isoprene, and isobutylene; vinyl ethers such as vinyl alkyl ether, and vinyl chloride

The acrylic polymer (A) can be prepared by a publicly known or commonly used polymerization method. In the preparation, the above-described monomer composition is used. Examples of such a method include solution polymerization, emulsion polymerization, mass polymerization, and photopolymerization. It is preferable to use a curing reaction caused by heat or active energy rays (e.g., ultraviolet rays) with a polymerization initiator such as a thermal polymerization initiator or a photopolymerization initiator in preparation of the acrylic polymer (A). Especially, because of the short polymerization period, it is preferable to use a curing reaction with a photopolymerization initiator.

The acrylic polymer (A) can be prepared by irradiating a monomer composition including a monomer (a) for polymer (A) that contains a photopolymerization initiator with an active energy rays (e.g., ultraviolet rays) to polymerize the monomer (a) for polymer (A). As will be described later, in the preparation of the acrylic polymer (A), other components to be included in the pressure-sensitive adhesive layer such as the acrylic polymer (A) and the hollow microspheres (C) may be added in addition to the polymerization initiator. The polymerization initiator such as a thermal polymerization initiator or a photopolymerization initiator used for preparation of the acrylic polymer (A) compounds can be used alone or in a combination of two or more kinds.

Examples of the thermal polymerization initiator include: azo polymerization initiators such as 2,2'-azobisisobutyronitrile, 2,2'-azobis-2-methylbutyronitrile, 2,2'-azobis(2-methylpropionic acid)dimethyl, 4,4'-azobis-4-cyanovalerianic acid), azobis isovaleronitrile, 2,2'-azobis(2-amidinopropane)dihydrochloride, 2,2'-azobis[2-(5-methyl-2-imidazoline-2-yl)propane]dihydrochloride, 2,2'-azobis(2-methylpropionamidine)disulfate, and 2,2'-azobis (N,N'-dimethyleneisobutylamidine)dihydrochloride; peroxide polymerization initiators such as dibenzoyl peroxide, t-butyl permaleate, and lauroyl peroxide; and redox polymerization initiators. The amount of the thermal polymerization initiator is not limited to a specific amount and may be any amount within a normal range in which the thermal polymerization initiator can be normally used.

Examples of the photopolymerization initiator include benzoin ether photopolymerization initiators, acetophenone photopolymerization initiators, $\alpha$-ketol photopolymerization initiators, aromatic sulfonyl chloride photopolymerization initiators, photoactive oxime photopolymerization initiators, benzoin photopolymerization initiators, benzyl photopolymerization initiators, benzophenone photopolymerization initiators, ketal photopolymerization initiators, thioxanthone photopolymerization initiators, and acylphosphine oxide photopolymerization initiators.

Examples of the benzoin ether photopolymerization initiators include: benzoin methyl ether; benzoin ethyl ether; benzoin propyl ether; benzoin isopropyl ether; benzoin isobutyl ether; 2,2-dimethoxy-1,2-diphenylethane-1-one (IRGACURE 651 supplied by BASF); and anisole methyl ether. Examples of the acetophenone photopolymerization initiators include: 1-hydroxycyclohexyl phenyl ketone (IRGACURE 184 supplied by BASF); 4-phenoxy dichloroacetophenone; 4-t-butyl-dichloroacetophenone; 1-[4-(2-hydroxyethoxy)-phenyl]-2-hydroxy-2-methyl-1-propane-1-one (IRGACURE 2959 supplied by BASF); 2-hydroxy-2-methyl-1-phenyl-propane-1-one (DAROCUR 1173 supplied by BASF); and methoxy acetophenone. Examples of the $\alpha$-ketol photopolymerization initiators include: 2-methyl-2-hydroxy propiophenone; and 1-[4-(2-hydroxyethyl)-phenyl]-2-hydroxy-2-methylpropane-1-one.

Examples of the aromatic sulfonyl chloride photopolymerization initiators include 2-naphthalene sulfonyl chloride. Examples of the photoactive oxime photopolymerization initiators include 1-phenyl-1,1-propanedione-2-(o-ethoxycarbonyl)-oxime. Examples of the benzoin photopolymerization initiators include benzoin. Examples of the benzyl photopolymerization initiators include benzyl. Examples of the benzophenone photopolymerization initiators include: benzophenone; benzoylbenzoic acid; 3,3'-dimethyl-4-methoxybenzophenone; poly-

vinyl benzophenone; and $\alpha$-hydroxy cyclohexyl phenyl ketone. Examples of the ketal photopolymerization initiators include benzyldimethyl ketal. Examples of the thioxanthone photopolymerization initiators include: thioxanthone; 2-chlorothioxanthone; 2-methyl thioxanthone; 2,4-dimethyl thioxanthone; isopropyl thioxanthone; 2,4-dichloro thioxanthone; 2,4-diethyl thioxanthone; isopropyl thioxanthone; 2,4-diisopropyl thioxanthone; and dodecyl thioxanthone.

Examples of the acylphosphine oxide photopolymerization initiators include: bis(2,6-dimethoxybenzoyl)phenylphosphine oxide, bis(2,6-dimethoxybenzoyl)(2,4,4-trimethylpentyl)phosphine oxide; bis(2,6-dimethoxybenzoyl)-n-butyl phosphine oxide; bis(2,6-dimethoxybenzoyl)-(2-methylpropane-1-yl)phosphine oxide; bis(2,6-dimethoxybenzoyl)-(1-methylpropane-1-yl)phosphine oxide; bis(2,6-dimethoxybenzoyl)-t-butylphosphine oxide; bis(2,6-dimethoxybenzoyl)cyclohexylphosphine oxide; bis(2,6-dimethoxybenzoyl)octylphosphine oxide; bis(2-methoxybenzoyl)(2-methylpropane-1-yl)phosphine oxide; bis(2-methoxybenzoyl)(1-methylpropane-1-yl)phosphine oxide; bis(2,6-diethoxybenzoyl)(2-methylpropane-1-yl)phosphine oxide, bis(2,6-diethoxybenzoyl)(1-methylpropane-1-yl)phosphine oxide; bis(2,6-dibutoxybenzoyl)(2-methylpropane-1-yl)phosphine oxide; bis(2,4-dimethoxybenzoyl)(2-methypropane-1-yl)phosphine oxide; bis(2,4,6-trimethylbenzoyl)(2,4-dipentoxyphenyl)phosphine oxide; bis(2,6-dimethoxybenzoyl)benzyl phosphine oxide, bis(2,6-dimethoxybenzoyl)-2-phenylpropyl phosphine oxide; bis(2,6-dimethoxybenzoyl)-2-phenylethyl phosphine oxide, bis(2,6-dimethoxybenzoyl)benzyl phosphine oxide; bis(2,6-dimethoxybenzol)-2-phenylpropyl phosphine oxide; his(2,6-dimethoxybenzoyl)-2-phenylethyl phosphine oxide; 2,6-dimethoxybenzoyl benzylbutylphosphine oxide; 2 6-dimethoxybenzoyl benzyloctylphosphine oxide, bis(2,4,6-trimethylbenzoyl)-2,5-diisopropylphenylphosphine oxide; bis(2,4,6-trimethylbenzoyl)-2-methylphenylphosphine oxide; bis(2,4,6-trimethylbenzoyl)-4-methylphenylphosphine oxide; bis(2,4,6-trimethylbenzoyl)-2,5-diethylphenylphosphine oxide; bis(2,4,6-trimethylbenzoyl)-2,3,5,6-tetramethylphenylphosphine oxide; bis(2,4,6-trimethyl benzoyl)-2,4-di-n-butoxy phenylphosphine oxide, 2,4,6-trimethylbenzoyl diphenylphosphine oxide; bis(2,6-dimethoxybenzoyl)-2,4,4-trimethylpentylphosphine oxide; bis(2,4,6-trimethylbenzoyl)isobutylphosphine oxide; 2,6-dimethoxybenzoyl-2,4,6-trimethylbenzoyl-n-butylphosphine oxide; bis(2,4,6-trimethylbenzoyl)phenylphosphine oxide; bis(2,4,6-trimethylbenzoyl)-2,4-dibutoxyphenylphosphine oxide; 1,10-bis[bis(2,4,6-trimethylbenzoyl)phosphine oxide]decane; and tri(2-methylbenzoyl)phosphine oxide.

The amount of the photopolymerization initiator is not limited to a specific amount as long as the acrylic polymer (A) can be formed by the photopolymerization reaction. For example, the amount of the photopolymerization initiator is preferably from 0.01 to 5 parts by mass, more preferably from 0.03 to 3 parts by mass, further more preferably from 0.05 to 2 parts by mass, based on 100 parts by mass of all monomer components used for forming the acrylic polymer (A).

When the amount of photopolymerization initiator is equal to or more than 0.01 part by mass, a sufficient level of polymerization reaction can be performed. When the amount of photopolymerization initiator is equal to or less than 5 parts by mass, the molecular weight of polymer to be formed is more likely to increase. Further, the photopolymerization initiator absorbs the ultraviolet rays, and thus the ultraviolet rays do not reach the inside of the pressure-sensitive adhesive composition. Accordingly, the polymerization rate hardly decreases. Therefore, the cohesion force of the pressure-sensitive adhesive layer to be formed is more likely to be high.

During the activation of the photopolymerization initiator, it is important to apply the active energy rays to the monomer composition including the monomer (a) for polymer (A) containing the photopolymerization initiator. Examples of such active energy rays include: ionization radiations such as alpha rays, beta rays, gamma rays, neutron rays, and electron rays; and ultraviolet rays. Especially, the ultraviolet rays are preferred. An amount, time, and a method of application of the active energy rays are not limited to specific amount, time, and method as long as a reaction of monomer components occurs by activating the photopolymerization initiator.

A weight-average molecular weight (Mw) of the acrylic polymer (A) may be from 100,000 to 5,000,000. The weight-average molecular weight of the acrylic polymer (A) may be measured by the gel permeation chromatography (GPC) in terms of polystyrene standard. Specifically, the weight-average molecular weight of the acrylic polymer (A) is measured at a flow rate of 0.5 ml/min with tetrahydrofuran solvent by HPLC8020 supplied by Tosoh Corporation using TSKgelGMH-H(20) $\times$ 2 as columns.

In terms of the high strength of adhesion force (adhesive to an object), large push-out adhesive force, and high impactproof reliability of the double-sided pressure-sensitive adhesive sheet (the pressure-sensitive adhesive layer), a glass transition temperature (Tg) of the acrylic polymer (A) is preferably from -70 to -40°C, more preferably, from -70 to -50°C. The glass transition temperature of the acrylic polymer (A) may be properly controlled according to kinds or amount of the monomer components (monomer units) included in the acrylic polymer (A).

The glass transition temperature (Tg) of the acrylic polymer (A) is a glass transition temperature (a theoretical value) expressed by the following calculation formula (Fox formula). A glass transition temperature of the acrylic polymer (B), which will be described later, can be calculated in a similar manner.

$$\text{Calculation formula: } 1/Tg = \sum (Wi/Tgi)$$

where Tg is a glass transition temperature (unit: K) of the acrylic polymer (A), Tgi is a glass transition temperature (unit: K) of a homopolymer of a monomer i, and Wi is a mass fraction that expresses the ratio of the mass of the monomer i to the mass of the total monomer components (i = 1, 2,..., n). This formula is for the acrylic monomer (A) including monomer 1, monomer 2,..., and monomer n, that is, n kinds of monomers.

The glass transition temperatures of the homopolymer used herein are temperatures listed in "Polymer Handbook", (third edition, John Wiley & Sons, Inc, 1989). If different values of temperatures are listed for one polymer, "conventional" value is used. For a temperature that is not listed in "Polymer Handbook", a method described below may be used to obtain a temperature (see Japanese Unexamined Patent Application Publication No. 2007-51271, for example).

Specifically, in a reactor equipped with a thermometer, a stirrer, a nitrogen inlet tube, and a reflux condenser, 100 parts by mass of the monomer, 0.2 parts by mass of azobisisobutyronitrile, and 200 parts by mass of ethyl acetate as a polymerization solvent, are placed and stirred for one hour while nitrogen gas is introduced thereto. After oxygen is removed from the polymerization system in this way, the temperature in the reactor is raised to 63°C and the reaction is continued for 10 hours. Then, the temperature in the reactor is lowered to a room temperature to obtain homopolymer solution with a solid content of 33% by mass. The obtained homopolymer solution is cast and applied onto a release liner and dried to obtain a test sample having a thickness of about 2 mm (homopolymer having a sheet-like shape). The test sample is blanked into a disc-like shape having a diameter of 7.9 mm and is held between parallel plates. A viscoelasticity of the test sample is measured in a shear mode using a viscoelasticity meter (rheometer) (ARES supplied by Rheometric Scientific F.E. LTD, now TA Instruments), while varying the temperature from -70 to 150°C at a rate of temperature rise of 5°C per minute with the application of shearing strain at a frequency of 1 Hz. A peak-top temperature of tan delta is defined as a glass transition temperature of the homopolymer.

Acrylic Polymer (B)

The pressure-sensitive adhesive layer contains an acrylic polymer (B) other than the acrylic polymer (A) as an essential component. The acrylic polymer (B) is a polymer having a weight-average molecular weight smaller than that of the acrylic polymer (A). In the pressure-sensitive adhesive layer, the acrylic polymer (A) and the acrylic polymer (B) are in a mixed state.

The amount of the acrylic polymer (B) in the pressure-sensitive adhesive layer is preferably from 5 to 50 parts by mass, more preferably from 5 to 45 part by mass, further more preferably from 10 to 40 parts by mass, based on 100 parts by mass of the acrylic polymer (A). When the amount of the acrylic polymer (B) in the pressure-sensitive adhesive layer is equal to or more than 5 parts by mass, high push-out adhesive force is provided. When the amount of the acrylic polymer (B) in the pressure-sensitive adhesive layer is equal to or less than 50 parts by mass, the acrylic polymer (A) and the acrylic polymer (B) are dissolved in the pressure-sensitive adhesive layer and less likely to be subjected to a phase separate.

The acrylic polymer (B) having a glass transition temperature higher than that of the acrylic polymer (A) is preferred. The glass transition temperature (Tg) of the acrylic polymer (B) is preferably equal to or more than 20°C, more preferably equal to or more than 30°C, and further more preferably equal to or more than 40°C. When the glass transition temperature (Tg) of the acrylic polymer (B) is equal to or more than 20°C, cohesion of the polymer (A) and the polymer (B) in the pressure-sensitive adhesive layer at a temperature equal to or higher than a room temperature is provided and a retention capacity and high-temperature adhesive properties are provided. An upper limit of the glass transition temperature (Tg) of the acrylic polymer (B) is about 300°C, although the upper limit varies depending on the kind of the acrylic polymer (B). The glass transition temperature of the acrylic polymer (B) is preferably higher than that of the acrylic polymer (A) by 90°C or more.

A weight-average molecular weight of the acrylic polymer (B) is equal to or more than 1,000 and less than 30,000, preferably equal to or more than 2,500 and less than 15,000, more preferably equal to or more than 3,000 and less than 10,000.

If the weight-average molecular weight of the acrylic polymer (B) is equal to or more than 1,000, appropriate levels of the adhesion and the retention capacity of the pressure-sensitive adhesive layer (pressure-sensitive adhesive surface) can be obtained. If the weight-average molecular weight of the acrylic polymer (B) is less than 30,000, appropriate level of the compatibility with the acrylic polymer (A) can be obtained.

The weight-average molecular weight of the acrylic polymer (B) may be measured by the GPC in terms of polystyrene standard. Specifically, the weight-average molecular weight of the acrylic polymer (B) is measured at a flow rate of 0.5 ml/min with tetrahydrofuran solvent by HPLC8020 supplied by Tosoh Corporation using TSKgelGMH-H(20) × 2 as columns.

Preparation of the acrylic polymer (B) will be explained. The acrylic polymer (B) is a polymer of monomers (b) for the polymer (B). The monomers (b) for the polymer (B) may include (meth)acrylic acid ester (b1) as a main component. The acrylic polymer (B) is prepared by polymerizing (meth)acrylic acid ester (b1) using a polymerization method such as solution polymerization, bulk polymerization, emulsion polymerization, suspension polymerization, and mass polymerization.

Examples of (meth)acrylic acid ester (b1) include: linear-chain or branched-chain (meth)acrylic acid alkyl ester with a carbon number of 1 to 12 such as (meth)acrylic acid methyl, (meth)acrylic acid ethyl, (meth)acrylic acid propyl, (meth)acrylic acid butyl, (meth)acrylic acid isobutyl, (meth)acrylic acid pentyl, (meth)acrylic acid hexyl, (meth)acrylic acid-2-ethylhexyl, (meth)acrylic acid octyl, (meth)acrylic acid nonyl, (meth)acrylic acid decyl, and (meth)acrylic acid dodecyl; esters of (meth)acrylic acids with alicyclic alcohols such as cyclohexyl (meth)acrylate and (meth)acrylic acid isobornyl; and (meth)acrylic acid aryl esters such as (meth)acrylic acid phenyl and (meth)acrylic acid benzyl. The (meth) acrylic acid ester (b1) compounds can be used alone or in a combination of two or more kinds.

The following compounds may be used as a monomer component (monomer unit) of the acrylic polymer (B): (meth)acrylic acid esters having an alicyclic hydrocarbon group such as cyclohexyl methacrylate (CHMA); and (meth) acrylic acid alkyl ester including any one of a linear-chain alkyl group with a carbon number of 1 to 12 and a branched-chain alkyl group with a carbon number of 1 to 12 (more preferably, (meth)acrylic acid alkyl ester including an alkyl group with a carbon number of 1 to 8 such as isobutyl methacrylate).

Other than the (meth)acrylic acid esters (b1), the acrylic polymer (B) can be prepared by copolymerizing copolymerizable monomers (b2) having polymerizable unsaturated bonds that enable copolymerization with the (meth) acrylic acid alkyl ester (b1) (hereinafter referred to as the copolymerizable monomers (b2)).

Examples of the copolymerizing monomer (b2) include (meth)acrylic acid; alkoxyalkyl (meth)acrylates such as methoxyethyl (meth)acrylate, ethoxyethyl (meth)acrylate, propoxyethyl (meth)acrylate, butoxyethyl (meth)acrylate and ethoxypropyl (meth)acrylate; salts such as alkali metal (meth)acrylates: (poly)alkylene glycol di(meth)acrylates such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate and tripropylene glycol di(meth)acrylate; multivalent (meth)acrylic acid esters such as trimethylolpropane tri(meth)acrylate; (meth)acrylonitrile; vinyl acetate; vinylidene chloride; halogenated chloride compounds such as 2-chloroethyl (meth)acrylate; oxazoline group-containing polymerizable compounds such as 2-vinyl-2-oxazoline, 2-vinyl-5-methyl-2-oxazoline, and 2-isopropenyl-2-oxazoline; aziridine group-containing polymerizable compounds such as (meth)acryloylaziridine and 2-aziridinylethyl (meth)acrylate; epoxy group-containing vinyl monomers such as allyl glycidyl ether, glycidyl ether (meth)acrylate, and 2-ethyl glycidyl ether (meth)acrylate; hydroxyl group-containing vinyl monomers such as 2-hydroxyethyl (meth) acrylate, 2-hydroxypropyl (meth)acrylate, monoester of (meth)acrylic acid and polypropylene glycol or polyethylene glycol, and adducts of lactones and 2-hydroxyethyl (meth)acrylate; fluoroine-containing vinyl monomers such as fluorine-substituted alkyl (meth)acrylates; unsaturated carboxylic acids such as itaconic acid, crotonic acid, maleic acid and fumaric acid, salts thereof, and (partial)ester compounds, and acid anhydrides thereof; reactive halogen-containing vinyl monomers such as 2-chloroethyl vinyl ether and vinyl monochloroacetate; amido group-containing vinyl monomers such as methcrylamide, N-methylol methacrylamide, N-methoxyethyl methacrylamide, N-butoxymethyl methacrylamide and N-arcyloyl morpholine; organic silicon-containing vinyl monomers such as vinyltrimethoxysilane, $\gamma$-methacryloxypropyltrimethoxysilane, allyltrimethoxysilane, trimethoxysilylpropylallylamine, and 2-methoxyethoxytrimethoxysilane; and besides, macro monomers having a radically polymerizable vinyl group at a terminal of the monomer in which the vinyl group is polymerized. These monomers can be used alone or in a combination of two or more kinds.

A percentage of the (meth)acrylic acid ester (b1) is preferably equal to or more than 90% by mass, more preferably equal to or more than 95% by mass, based on a total mass of all monomer components used for forming the acrylic polymer (B) (i.e., all components of the monomer (b) for polymer (B)). The upper limit of the percentage is not particularly limited as long as it is equal to or less than 100% by mass.

Herein, the acrylic polymer (B) that includes the (meth)acrylic acid ester in an amount equal to or more than 50%, based on the total monomer components for forming the acrylic polymer (B) may be referred to as methacrylic polymer (B1).

The following copolymers may be used for the acrylic polymer (B): copolymer of cyclohexyl methacrylate (CHMA) and isobutyl methacrylate (IBMA); copolymer of cyclohexyl methacrylate (CHMA) and isobornyl methacrylate (IBXMA); copolymer of cyclohexyl methacrylate (CHMA) and acryloyl morpholine (ACMO); and copolymer of cyclohexyl methacrylate (CHMA) and diethylacrylamide (DEAA). The copolymers are examples of the methacrylic polymer (B1).

The composition ratio of the monomer (b) for polymer (B) for forming the acrylic polymer (B) is such that a total mass ratio of (meth)acrylic acid esters having an alicyclic hydrocarbon group (for example, cyclohexyl(meth)acrylate (CHMA)) is preferably from 50 to 85% by mass, and more preferably from 55 to 75% by mass, based on the total mass of all monomer components included in the acrylic polymer (B). A percentage of a total mass of each of the isobutyl methacrylate (IBMA), the acryloyl morpholine (ACMO), and the diethylacrylamide (DEAA) is preferably from 15 to 50% by mass, and more preferably from 25 to 45% by mass, based on the total mass of all monomer components included in the acrylic polymer (B).

The acrylic polymer (B) may have a functional group that has reactivity with an epoxy group or an isocyanate group. Examples of the functional group include hydroxyl group, carboxyl group, amino group, amide group, and mercapto group.

To adjust the molecular weight of the acrylic polymer (B), a chain transfer agent may be used during the polymerization of the acrylic polymer (B). Examples of the chain transfer agent include: compounds having a mercapt group such as octylmercaptan, dodecyl mercaptan, t-dodecyl mercaptan; thioglycolic acid; ethyl thioglycolate; propyl thioglycolate; butyl thioglycolate; t-butyl thioglycolate; 2-ethylhexyl thioglycolate, octyl thioglycolate; decyl thioglycolate; dodecyl thioglycolate; thioglycolic acid esters of ethylene glycol; thioglycolic acid ester of neopentyl glycol; and thioglycolic acid ester of pentaerythritol. Especially, thioglycolic acids may be preferred among the examples of the chain transfer agent.

The amount of the chain transfer agent is not limited to a specific amount. The amount of the chain transfer agent is usually from 0.1 to 20 parts by mass, preferably from 0.2 to 15 parts by mass, more preferably from 0.3 to 10 parts by mass, based on 100 parts by mass of all monomer components used for forming the acrylic polymer (B) (i.e., all components of the monomer (b) for polymer (B)). By adjusting the amount of the chain transfer agent as described above, the acrylic polymer (B) having a preferred molecular weight can be prepared.

A method of mixing the acrylic polymer (B) into the pressure-sensitive adhesive layer is not limited to a specific method. It is preferable to use a method of mixing the acrylic polymer (B) into a monomer composition that includes the monomer (a) for polymer (A) used for preparing the acrylic polymer (A) together with the polymerization initiator.

Hollow microspheres (C)

The pressure-sensitive adhesive layer includes the hollow microspheres (C) as an essential component. The hollow microspheres (C) are dispersed in the mixture of the acrylic polymer (A) and the acrylic polymer (B) and contained in the pressure-sensitive adhesive layer.

The hollow microspheres (C) are not particularly limited as long as the intended effect is obtained. Examples of the hollow microspheres (C) include inorganic hollow microspheres and organic hollow microspheres. Examples of the inorganic hollow microspheres include: hollow balloons made of glass such as hollow glass balloons; hollow balloons made of metal compound such as hollow alumina balloons; and hollow balloons made of porcelain such as hollow ceramic balloons. Examples of the organic hollow microspheres include resin hollow balloons such as hollow acrylic balloons and hollow vinylidene chloride balloons. The hollow microspheres (C) can be used alone or in a combination of two or more kinds.

Inorganic hollow microspheres may be selected from hollow microspheres (C) in terms of polymerization efficiency in polymerization by active energy rays (especially ultraviolet rays) and gravity. Particularly, hollow glass balloons may be preferred. If the hollow glass balloons are used as the hollow microspheres (C), an adhesive ability of the pressure-sensitive adhesive layer can be improved without reducing other abilities such as a shearing force and a holding ability. Examples of hollows glass balloons in the market include Fuji balloon H-40 supplied by FUJI SILYSIA CHEMICAL LTD., and Sphericel 25P45 supplied by Potters-Ballotini Co., Ltd. The surfaces of the hollow microspheres (C) may be subjected to various surface treatments (e.g., low surface tension treatment by silicone compound or fluorine compound).

A particle diameter (mean particle diameter) of the hollow microspheres (C) is not limited to a specific size. A preferable particle diameter may be from 1 $\mu$m to 500 $\mu$m, more preferably from 5 $\mu$m to 200 $\mu$m, further more preferably from 20 $\mu$m to 80 $\mu$m, and still further more preferably from 30 $\mu$m to 50 $\mu$m.

A specific gravity (true density) of the hollow microspheres (C) is not limited to a specific value. A preferable specific gravity may be from 0.1 g/cm$^3$ to 0.8 g/cm$^3$, more preferably from 0.15 g/cm$^3$ to 0.5 g/cm$^3$. When the specific gravity of the hollow microspheres (C) is equal to or more than 0.1 g/cm$^3$, floating of the hollow microspheres (C) is less likely to occur during mixture thereof into the pressure-sensitive adhesive composition used for forming the pressure-sensitive adhesive composition. Therefore, the hollow microspheres (C) are more likely to be evenly dispersed in the pressure-sensitive adhesive composition. Further, problems relating to strength hardly occur, and thus the hollow microspheres (C) are less likely to be broken. When the specific gravity of the hollow microspheres (C) is equal to or less than 0.8 g/cm$^3$, a transmission rate of active energy rays (especially ultraviolet rays) is hardly lowered, and thus efficiency of photo-curing reaction is hardly lowered. In addition, mass of the double-sided pressure-sensitive adhesive sheet hardly increases, and thus workability is hardly lowered.

The amount of the hollow microspheres (C) may be preferably from 0.1 to 15 parts by mass, more preferably from 1 to 11 parts by mass, further more preferably from 3 to 10 parts by mass, based on 100 parts by mass of the acrylic polymer (A). When the amount of the hollow microspheres (C) is equal to or more than 0.1 part by mass, the pressure-sensitive adhesive layer has sufficient adhesion. When the amount of the hollow microspheres (C) is equal to or less than 15 parts by mass, the hollow microspheres (C) can be mixed and dispersed in the pressure-sensitive adhesive composition.

Configuration Not Substantively Including Bubbles

The pressure-sensitive adhesive layer has a configuration that does not substantively include bubbles. In this specification, the phrase "does not substantively include bubbles" means that bubbles may be unintentionally included in the pressure-sensitive adhesive layer but not actively included therein. A content of bubbles in the pressure-sensitive adhesive layer is ideally zero. The content of bubbles in the actual pressure-sensitive adhesive layer is preferably equal to or less than 3% by volume, more preferably equal to or less than 1% by volume, based on an overall volume (100% by volume) of the pressure-sensitive adhesive layer. When the content of bubbles in the pressure-sensitive adhesive layer is equal to or less than 3% by volume, the pressure-sensitive adhesive layer can have a proper hardness and thus have strength against deformation.

The content (% by volume) of the bubbles in the pressure-sensitive adhesive layer can be measured by the following method.

Measurement Method

1. Prepare a sample for measurement by cutting the pressure-sensitive adhesive layer in the thickness direction while damage to a cut surface is maintained as small as possible. The sample may be prepared by soaking the pressure-sensitive adhesive layer in liquid nitrogen and rupturing the pressure-sensitive adhesive layer.
2. Magnify the surface of the sample (cut surface or ruptured surface) by 100 times by a field emission scanning electron microscope (FE-SEM) (supplied by Hitachi High-Technologies Corporation, type: S-4800).
3. Calculate a total area S2 of bubbles in a reference area S1 in a box defined by a width of 1 mm by a thickness of the pressure-sensitive adhesive layer in the magnified cut surface.
4. Calculate a percentage of bubbles in the cut surface by equation $(S2/S1) \times 100$.
5. Repeat the above steps 1 to 4 to obtain five samples at separate locations at equal intervals in one direction of the pressure-sensitive adhesive layer, and determine a mean of percentages of obtained samples as a content (% by volume) of the bubbles in the pressure-sensitive adhesive layer.

The pressure-sensitive adhesive layer to be included in the double-sided pressure-sensitive adhesive sheet of this embodiment may contain other components depending on usage of the double-sided pressure-sensitive adhesive sheet. For example, a cross-linking agent may be contained. The cross-linking agent is used for adjusting the cohesion force of the pressure-sensitive adhesive layer. Examples of the cross-linking agent includes epoxy cross-linking agent, isocyanate cross-linking agent, silicone cross-linking agent, oxazoline cross-linking agent, aziridine cross-linking agent, silane cross-linking agent, alkyl-etherified melamine cross-linking agent, and metal chelate cross-linking agent. The isocyanate cross-linking agent and epoxy cross-linking agent may be preferred.

Examples of the isocyanate cross-linking agent include: tolylene diisocyanate; hexamethylene diisocyanate; isophorone diisocyanate; xylylene diisocyanate; hydrogenated xylylene diisocyanate; diphenylmethane diisocyanate; hydrogenated diphenylmethane diisocyanate; tetramethyl xylylene diisocyanate; naphthalene diisocyanate; triphenylmethane triisocyanate; polymethylene polyphenyl isocyanate; and adducts of one of the above compounds and polyols such as trimethylolpropane.

Examples of the epoxy cross-linking agent include: bisphenol A; epichlorohydrin type epoxy resin; ethyleneglycidylether; polyethylene glycol diglycidyl ether; glycerin diglycidyl ether; glycerin triglycidyl ether; 1,6-hexanediol glycidyl ether; trimethylolpropane triglycidyl ether; diglycidyl aniline; diamine glycidyl amine; N,N,N',N'-tetraglycidyl-m-xylylenediamine; and 1,3-bis(N,N'-diamine glycidyl aminomethyl)cyclohexane.

The pressure-sensitive adhesive layer may include the following components as long as an intended effect can be achieved: cross-linking promoter; silane coupling agent; antioxidant; filler (except the hollow microspheres); colorant (pigment, dye); ultraviolet ray absorbing agent; antioxidant; chain transfer agent; plasticizing agent; softener; antistatic agent; and solvent. These components can be used alone or in a combination of two or more kinds.

The pressure-sensitive adhesive layer may contain other type of adhesive as long as an intended effect can be achieved. Such adhesive includes acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, and epoxy pressure-sensitive adhesive. These pressure-sensitive adhesives can be used alone or in a combination of two or more kinds.

The content (% by mass) of the acrylic polymer (A), the acrylic polymer (B), and the hollow microspheres (C) is preferably equal to or more than 95% by mass, more preferably equal to or more than 97% by mass, and further more preferably equal to or more than 99% by mass, based on the total mass of the pressure-resistive adhesive layer. The upper limit of the content is not particularly limited as long as it is equal to or less than 100% by mass.

Method of Forming Pressure-sensitive Adhesive Layer

The pressure-sensitive adhesive layer of this embodiment that is used for the double-sided pressure-sensitive adhesive sheet may be formed using pressure-sensitive adhesive composition. The composition is not limited to any particular one as long as the pressure-sensitive adhesive layer described above can be formed. The composition may be selected as appropriate for an intended purpose. As the pressure-sensitive adhesive composition, a curable pressure-sensitive adhesive composition that at least includes a mixture of the monomer composition containing the monomers (a) for polymer (A), the acrylic polymer (B), the hollow microspheres (C), and a polymerization initiator that is used in polymerization of the monomer composition (the monomers (a) for polymer (A)) may be preferably used in view of workability. A photo-curable pressure-sensitive adhesive composition that includes a photopolymerization initiator as the polymerization initiator may be preferred as the pressure-sensitive adhesive composition. The curable pressure-sensitive adhesive composition is a so-called solventless type pressure-sensitive adhesive composition. The curable pressure-sensitive adhesive composition is prepared by adding and mixing other components such as the acrylic polymer (B) and the hollow microspheres (C) into the monomer composition.

Generally, the monomer composition is preferably a mixture of monomers (a) for polymer (A) that contain (meth) acrylic acid alkyl ester (a1) and a polar group-containing copolymerizable monomer (a2). The monomer composition is generally in a liquid state although the monomer composition may be in a different state depending on the kind or the composition ratio. To increase the viscosity of the monomer composition and workability (easiness in handling), a partial polymer may be formed by partially polymerizing monomers (i.e., monomers (a) for the polymer (A)) in the monomer composition before other components such as the acrylic polymer (B) is added. The monomer composition including the partial polymer may be in a syrupy state. Unreacted monomer components are polymerized as appropriate after the curable pressure-sensitive adhesive composition is prepared.

For polymerization to form the partial polymer, a publicly known or commonly used polymerization method can be used. The monomer components in the monomer composition may be polymerized using various polymerization initiators (e.g., photopolymerization initiator) provided as examples in the description of the acrylic polymer (A). The polymerization rate of the partial polymer may be adjusted in a range preferably from 5 to 15% by mass, more preferably from 7 to 10% by mass. The polymerization rate of the partial polymer may be adjusted by determining a correlation between the viscosity of the monomer composition and the polymerization rate of the partial polymer in advance and by adjusting the viscosity of the monomer composition based on the correlation. The partial polymer is included in the pressure-sensitive adhesive layer as a part of the acrylic polymer (A) at the end.

If polyfunctional monomers (a3) are used as the monomers (a) for polymer (A), the polyfunctional monomers (a3) may be mixed into the monomer composition before the partial polymer is formed. Alternatively, the polyfunctional monomers (a3) may be mixed into the monomer composition after the partial polymer is formed. In terms of forming the cross-linking acrylic polymer and adequately increasing the cohesive property of the pressure-sensitive adhesive layer, it is preferable that the polyfunctional monomers (a3) are mixed into the monomer composition after the partial polymer is formed.

The prepared curable pressure-sensitive adhesive composition is applied to a base member such as a substrate and a release liner and layered. Then, a curing process is performed on the layered pressure-sensitive adhesive composition. A drying process may be performed before and/or after the curing process as necessary. If the pressure-sensitive adhesive composition includes a thermal polymerization initiator as a polymerization initiator, polymerization starts by heating and the pressure-sensitive adhesive composition is cured. If the pressure-sensitive adhesive composition includes a photopolymerization initiator as a polymerization initiator, polymerization starts by application of active energy rays such as ultraviolet rays and the pressure-sensitive adhesive composition is cured (photo-curing). The active energy rays may be applied from one side of the layered pressure-sensitive adhesive composition or from both sides thereof. When the pressure-sensitive adhesive composition is cured, the pressure-sensitive adhesive layer that can be used for the double-sided pressure-sensitive adhesive sheet of this embodiment is prepared.

For the curing (photo-curing) by the active energy rays, a publicly known or commonly used method for blocking oxygen may be used as necessary so that the polymerization is not disturbed by oxygen in the air. For example, an appropriate base member such as a release liner and a substrate may be attached to the surface of the layered pressure-sensitive adhesive composition (pressure-sensitive adhesive layer), or the photo-curing may be performed in a nitrogen atmosphere.

Application (or coating) of the pressure-sensitive adhesive composition can be performed by a publicly known or commonly used coating method. A known or commonly used coater such as gravure roll coater, reverse roll coater, kiss roll coater, dip roll coater, bar coater, knife coater, spray coater, comma coater, and direct coater can be used.

The pressure-sensitive adhesive layer may be formed using a pressure-sensitive adhesive composition other than the curable pressure-sensitive adhesive composition described earlier as long as an intended effect can be achieved (e.g., solvent-type pressure-sensitive adhesive composition and emulsion-type pressure-sensitive adhesive composition).

Thickness of Pressure-sensitive Adhesive Layer

In terms of achievement of large push-out adhesive force and high impactproof reliability, the thickness of the pressure-sensitive adhesive layer is preferably from 90 $\mu$m to 3,000 $\mu$m, more preferably from 90 $\mu$m to 800 $\mu$m, further more preferably from 90 $\mu$m to 600 $\mu$m. When the thickness of the pressure-sensitive adhesive layer is equal to or more than 90 $\mu$m, bump absorptivity is provided. When the thickness of the pressure-sensitive adhesive layer is equal to or less than 3,000 $\mu$m, poor polymerization hardly occurs and properties of the pressure-sensitive adhesive layer are maintained.

Release Liner

Surfaces of the pressure-sensitive adhesive layer (pressure-sensitive adhesive surfaces) of the double-sided pressure-sensitive adhesive sheet may be protected by release liners until the pressure-sensitive adhesive sheet is used. The pressure-sensitive adhesive surfaces may be protected by separate release liners or a single liner that is wound around the double-sided pressure-sensitive adhesive sheet in a roll shape. The release liner is used as a protective member for protecting the pressure-sensitive adhesive surface and thus is removed before the double-sided pressure-sensitive adhesive sheet is attached to an object. If the double-sided pressure-sensitive adhesive sheet is a substrate-less double-sided pressure-sensitive adhesive sheet, the release liner functions as a base member. The release liner is not compulsory and may not be attached to the double-sided pressure-sensitive adhesive sheet.

Commonly used release papers can be used for the release liners, that is, the release liners are not limited to any particular ones. For example, the following base members may be used for the release liners: base members having releasable layers; low-adhesive base members formed with fluorinated polymers; and low-adhesive base members formed with non-polar polymers. Examples of the base members having releasable layers include a plastic film and a piece of paper subjected to surface treatments with release agents such as silicone, long-chain alkyl, fluorine, and molybdenum sulfide release agents. Examples of fluorinated polymers of the low-adhesive base members include polytetrafluoroethylene, polychlorotrifuruoroethylene, polyvinyl fluoride, polyvinylidene fluoride, tetrafluoroethylene hexafluoropropylene copolymers, and chlorofluoroethylene vinylidene fluoride copolymers. Examples of the non-polar polymers include olefin resins (e.g., polyethylene, polypropylene). The release liners may be prepared by a publicly known or commonly used method. The thickness of the release liners is not limited to any specific thickness.

Substrate

If the double-sided pressure-sensitive adhesive sheet is a pressure-sensitive adhesive sheet with a substrate, a plastic film substrate may be used for such a substrate (hereinafter referred to as a plastic film substrate). The material of the plastic film substrate is not limited to any particular kind. Examples of the material include: polyester resin such as polyethylene terephthalate; acrylic resin such as polymethylmethacrylate; polycarbonate; triacetylcellulose; polysulfone; polyarylate; polyimide; polyvinyl chloride; polyvinyl acetate; polyethylene; polypropylene; ethylene propylene copolymer; and cyclic olefin polymer such as ARTON (cyclic olefin polymer, supplied by JSR Corporation) and ZEONOR (cyclic olefin polymer, supplied by ZEON CORPORATION). The plastic materials can be used alone or in a combination of two or more kinds. The substrate is a part that is to be attached to an object together with the pressure-sensitive adhesive layer when the double-sided pressure-sensitive adhesive sheet is attached (applied) to the object. The release liners that are removed from the double-sided pressure-sensitive adhesive sheet when the pressure-sensitive adhesive sheet is used are not included in the substrate.

Double-Sided Pressure-sensitive Adhesive Sheet

The double-sided pressure-sensitive adhesive sheet of this embodiment includes at least one layer of the pressure-sensitive adhesive layer described earlier. The double-sided pressure-sensitive adhesive sheet can be prepared by a publicly known or commonly used method. The total thickness of the double-sided pressure-sensitive adhesive sheet may be varied depending on forms thereof. For example, if the double-sided pressure-sensitive adhesive sheet is a substrate-less double-sided pressure-sensitive adhesive sheet (that includes only one pressure-sensitive adhesive layer), the thickness thereof is equal to the thickness of the above-described pressure-sensitive adhesive layer.

Push-Out Adhesive Force

The double-sided pressure-sensitive adhesive sheet of this embodiment has a push-out adhesive force equal to or larger than 30.0 N/cm$^2$. The push-out adhesive force is defined, for example, as follows. A sample for determination of the push-out adhesive force is prepared by bonding a polycarbonate plate and an acrylic plate with a frame-shaped double-sided pressure-sensitive adhesive sheet having an overall width of 40 mm, a height of 60 mm, and a frame width of 1 mm under a specified pressure. The acrylic plate is pressed from an inner side to an outer side in the thickness direction thereof at 10 mm/min until the acrylic plate is separated from the polycarbonate plate. The maximum stress among stresses measured since the pressure is applied to the sample until the polycarbonate plate and the acrylic plate are separated is defined as a push-out adhesive force.

An external force may be applied to members that are fixed by the double-sided pressure-sensitive adhesive sheet. As a result, the members may be warped or deformed. Even such a case, if the double-sided pressure-sensitive adhesive sheet has the above-defined push-out adhesive force equal to or larger than 30.0 N/cm$^2$, the sheet can keep holding the members.

Impactproof reliability

The double-sided pressure-sensitive adhesive sheet of this embodiment has impactproof reliability at a normal temperature (23°C). The impactproof reliability refers to a low probability that removal between two members bonded together with a double-sided pressure-sensitive adhesive sheet occurs when a device (e.g., a mobile phone) in which those members are installed is subjected to a drop impact. Because the double-sided pressure-sensitive adhesive sheet has the impactproof reliability, removal thereof from the members is less likely to occur when the device such as a mobile phone is dropped and an instantaneous large impact is applied to the device. Furthermore, the double-sided pressure-sensitive adhesive sheet (or the pressure-sensitive adhesive layer) is less likely to break in such a situation. Therefore, the members fixed with the double-sided pressure-sensitive adhesive sheet remain held.

Other characteristics

The double-sided pressure-sensitive adhesive sheet has workability in cutting or punching, easiness in working or handling, adhesiveness (to an object), durability, and weather resistance. The double-sided pressure-sensitive adhesive sheet having such characteristics can be used in various applications.

Example Applications of Double-Sided Pressure-Sensitive Adhesive Sheet

The double-sided pressure-sensitive adhesive sheet of this embodiment can be used for fixing members and modules installed in portable electronic devices. Examples of the portable electronic devices include mobile phones, personal handyphone systems (PHSs), smartphones, tablets (tablet PCs), mobile computers (mobile PCs), personal digital assistants (PDAs), electronic organizers, portable broadcast receivers such as portable television sets and portable radios, portable game consoles, portable audio players, cameras such as digital cameras, and video cameras such as camcorders.

How the double-sided pressure-sensitive adhesive sheet is used is not limited to any specific illustrated embodiment. Examples include fixing a lens (especially a glass lens) to a chassis, fixing a display panel to a chassis, fixing an input device such as a sheet-type keyboard or a touch panel to a chassis, attachment of a protective panel of an information display to a chassis, attachment of chassis, attachment of a decorative sheet to a chassis, and fixing members and modules installed in a portable electronic device.

The double-sided pressure-sensitive adhesive sheet may be used to fix optical members installed in a mobile phone. The double-sided pressure-sensitive adhesive sheet may be used to bind the optical members in the portable electronic device together or to fix the optical member(s) to a chassis in the portable electronic device.

The optical members refer to members having optical characteristics (e.g., polarization, photorefractive, light scattering, photoreflective, light transmissive, light absorbing, light diffraction, and optical rotation characteristics, and visibility). The optical members are not limited to any specific ones as long as the members have optical characteristics. Examples of the optical members include polarizing plates, wave plates, phase plates, optical compensation films, brightness enhancement films, light guide plates, reflection films, antireflection films, transparent conductive films (ITO films), design films, decorative films, surface protective plates, prisms, lenses, color filters, transparent substrates, and laminated member including the above examples. In the examples, configurations of "plates" and "films" include plates, films, and sheets. For example, the polarizing plates include polarizing films and polarizing sheets.

Materials of the optical members are not limited to any specific ones. Examples of the materials of the optical members include plastics such as acrylic resins, polycarbonate resins, and polyethylene terephthalate, glasses, and metals (including metal oxides). The double-sided pressure-sensitive adhesive sheet may be used preferably for plastic optical members (especially acrylic or polycarbonate optical members).

The double-sided pressure-sensitive adhesive sheet of this embodiment has a large push-out adhesive force and high impactproof reliability. The double-sided pressure-sensitive adhesive sheet may be used not only for binding members and modules installed in portable electronic devices with small screens but also for binding those installed in portable electronic devices with screen sizes of 35 $cm^2$ or larger (e.g., from 35 $cm^2$ to 650 $cm^2$). The double-sided pressure-sensitive adhesive sheet may be especially preferably used for binding members and modules installed in portable electronic devices with screen sizes of 40 $cm^2$ or larger (e.g., from 40 $cm^2$ to 650 $cm^2$).

The double-sided pressure-sensitive adhesive sheet may be used for fixing members and modules installed in devices other than the portable electronic devices described above. Examples of such devices include display devices (image display devices) and input devices. Examples of the display devices include liquid crystal display devices, organic EL (electroluminescence) display devices, plasma display panels (PDPs), and electronic papers. Examples of the input devices include touch panels.

EXAMPLES

Specific examples will be described. The scopes of the invention are not limited to the following examples.

Example 1

Preparation of Syrup

To a liquid monomer mixture (monomer composition) of 90 parts by mass of 2-ethylhexyl acrylate (2EHA) and 10 parts by mass of acrylic acid (AA) as monomer components, 0.05 parts by mass of IRGACURE 651 (2,2-dimethoxy-1,2-diphenylethane-1-one, supplied by BASF Japan Ltd.) and 0.05 parts by mass of IRGACURE 184 (1-hydroxycyclohexyl phenyl ketone, supplied by BASF Japan Ltd.) were added as photopolymerization initiators. Ultraviolet rays were applied to the mixture until the viscosity thereof became about 15 Pa·s (measured by BH viscometer, No. 5 rotor, at 10 rpm and 30°C). As a result, syrup containing a partial polymer in which a part of the monomer components was partially polymerized was prepared. The acrylic polymer (A) obtained from the syrup has a glass transition temperature (Tg) of -60.4°C.

Preparation of Polymer (B)

To a mixture of 60 parts by mass of cyclohexyl methacrylate (CHMA), 40 parts by mass of isobutyl methacrylate (IBMA), and 4 parts by mass of thioglycolic acid, nitrogen gas was blown to remove dissolved oxygen from the mixture. Then, the mixture was heated to 90°C. To the mixture, 0.05 parts by mass of PERHEXYL O (t-hexylperoxy 2-ethylhexanoate) supplied by NOF CORPORATION and 0.01 part by mass of PERHEXYL D (di-t-hexyl peroxide) supplied by NOF CORPORATION were added. The mixture was stirred at 90°C for one hour and heated for one hour to 150°C. The mixture was stirred again for one hour at 150°C. Then, the mixture was heated for one hour to 170°C and stirred at 170°C for one hour.

Next, the mixture was depressurized at 170°C. The mixture was stirred for one hour and residual monomers were removed. As a result, the polymer (B) was prepared. A weight-average molecular weight (Mw) of the prepared polymer (B) was 3,500. A glass transition temperature (Tg) of the prepared polymer (B) was 51°C.

Preparation of Pressure-sensitive Adhesive Composition

To 100 parts by mass of the syrup, 10 parts by mass of the polymer (B), 0.07 parts by mass of 1,6-hexanediol diacrylate (HDDA), and 9 parts by mass of hollow glass balloons (mean particle diameter of 40 $\mu$m) were added to obtain a mixture of the syrup. The hollow glass balloons were Sphericel 25P45 supplied by Potters-Ballotini Co., Ltd. Further, to the mixture, 0.04 parts by mass of IRGACURE 651 (2,2-dimethoxy-1,2-diphenylethane-1-one, supplied by BASF Japan Ltd.) as a photopolymerization initiator was added. Then, other additives were added. As an antioxidant, 0.5 parts by mass of Irganox 1010 (pentaerythritol tetrakis[3-(3,5-di-tert-butyl-4-hydroxyphenyl)propionate, supplied by BASF Japan Ltd.) was added to the mixture. Further, as a pigment, 0.02 parts by mass of AT DN101 (supplied by Dainichiseika Color & Chemicals Mfg. Co., Ltd.), and as a pigment dispersing solvent, 0.18 parts by mass of 2-ethylhexyl acrylate was added to the mixture. These components were sufficiently mixed together and the pressure-sensitive adhesive composition I was prepared.

Preparation of Double-Sided Pressure-Sensitive Adhesive Sheet

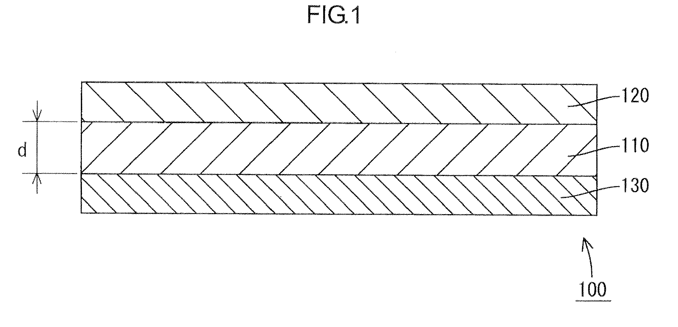

The pressure-sensitive adhesive composition I was applied to a releasable surface of a release liner and a coated layer was prepared. Another release liner was attached to a surface of the coated layer such that a pharmacologically processed surface of the release liner was in contact with the coated layer. A polyethylene terephthalate substrate having a pharmacologically proceed surface (MRF supplied by Mitsubishi Polyester Film) was used as the release liner.
Then, ultraviolet rays were applied to both surfaces of the coated layer at illuminance intensity of 5 mW/cm$^2$ for 3 minutes to harden the coated layer, and a pressure-sensitive adhesive layer (pressure-sensitive adhesive layer) having a thickness of 200 $\mu$m was prepared. Blacklight supplied by TOSHIBA CORPORATION was used as a source of the ultraviolet rays. The illuminance intensity was adjusted using a UV checker (UVR-T1 supplied by TOPCON CORPORATION) at the maximum sensitivity of 350 nm.
As described above, the double-sided pressure-sensitive adhesive sheet 100 (substrate-less double-sided pressure-sensitive adhesive sheet having a laminate structure of a release liner 120 / a pressure-sensitive adhesive layer 110 / a release liner 130) of Example 1 was prepared. A schematic structure of the double-sided pressure-sensitive adhesive sheet 100 of Example 1 is illustrated in FIG. 1. The thickness d of the pressure-sensitive adhesive layer 110 was 200 $\mu$m.

Example 2

A pressure-sensitive adhesive composition II was prepared in the same manner as Example 1, except that 20 parts by mass of the polymer (B) was added to 100 parts by mass of the syrup instead of 10 parts by mass of the polymer (B). Then, a double-sided pressure-sensitive adhesive sheet having a pressure-sensitive adhesive layer (having a thickness of 200 $\mu$m) including the pressure-sensitive adhesive composition II was prepared in the same manner as Example 1.

Example 3

A pressure-sensitive adhesive composition III was prepared in the same manner as Example 1, except that 30 parts by mass of the polymer (B) was added to 100 parts by mass of the syrup instead of 10 parts by mass of the polymer (B). Then, a double-sided pressure-sensitive adhesive sheet having a pressure-sensitive adhesive layer (having a thickness of 200 $\mu$m including the pressure-sensitive adhesive composition III was prepared in the same manner as Example 1.

Example 4

A pressure-sensitive adhesive composition IV was prepared in the same manner as Example 1, except that 20 parts by mass of the polymer (B) was added to 100 parts by mass of the syrup instead of 10 parts by mass of the polymer (B), and 0.1 part by mass of dipentaerythritol hexaacrylate (DPHA) was added to 100 parts by mass of the syrup instead of 0.07 parts by mass of 1,6-hexanediol diacrylate (HDDA). Then, a double-sided pressure-sensitive adhesive sheet having a pressure-sensitive adhesive layer (having a thickness of 200 $\mu$m) including the pressure-sensitive adhesive composition IV was prepared in the same manner as Example 1.

Comparative Example 1

A pressure-sensitive adhesive composition V was prepared in the same manner as Example I, except that the polymer (B) was not added to 100 parts by mass of the syrup. Then, a double-sided pressure-sensitive adhesive sheet having a pressure-sensitive adhesive layer (having a thickness of 200 $\mu$m) including the pressure-sensitive adhesive composition V was prepared in the same manner as Comparative Example 1.

Evaluation Test

Evaluation tests were conducted for Examples 1 to 4 and Comparative Example 1 to evaluate push-out adhesive force and impactproof reliability of each double-sided pressure-sensitive adhesive sheet.

Evaluation 1: Push-Out Adhesive Force

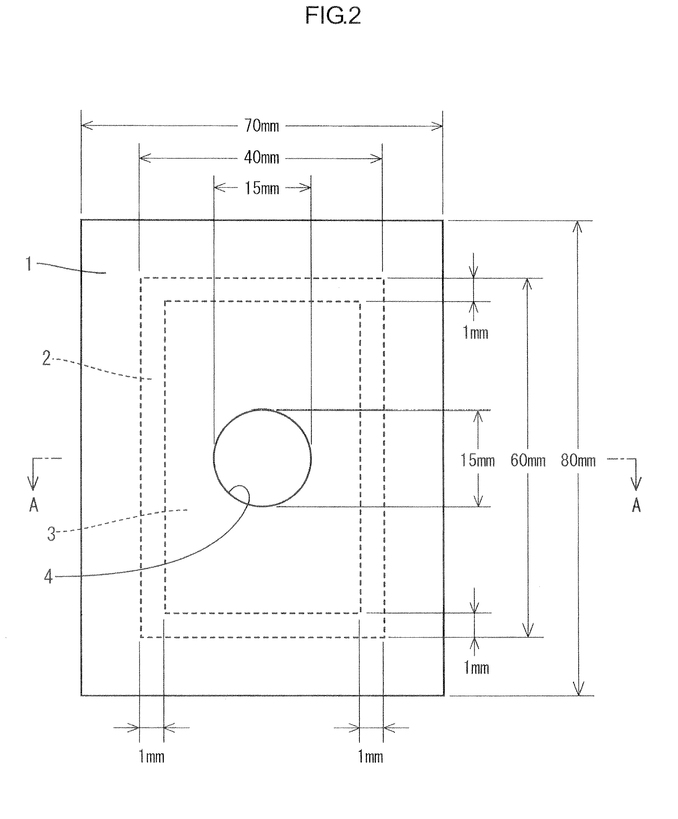

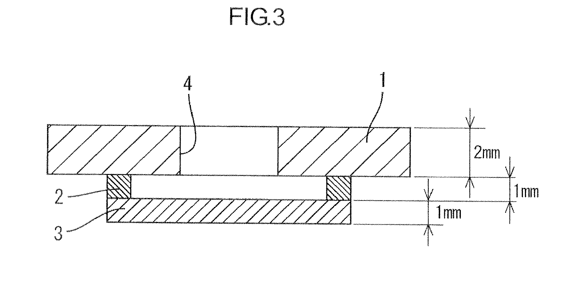

A schematic view (top view) of a sample used for measuring a push-out adhesive force is illustrated in FIG. 2. Each of the prepared double-sided pressure-sensitive adhesive sheets was cut into a window-frame-like shape (a frame-like shape) with a width of 1 mm in a size of 40-mm wide by 60-mm height as illustrated in FIG. 2. A window-frame shaped double-sided pressure-sensitive adhesive sheet was prepared. An acrylic plate (acrylic lens, width: 40mm, height: 60 mm, thickness: 1 mm) and a polycarbonate plate (PC plate, width: 70 mm, height: 80 mm, thickness: 2 mm) were bonded together with a window-frame shaped double-sided pressure-sensitive adhesive sheet. The polycarbonate plate (PC plate) had a through hole having a diameter of 15 mm at the center. The acrylic plate and the PC plate were pressure-bonded in a condition that a roller moves back and forth for one time while applying a predetermined pressing force (2 kg). The sample for evaluation was prepared. A cross-sectional view of the sample cut along line A-A in FIG. 2 is illustrated in FIG. 3. In FIGS. 2 and 3, reference numerals 1, 2, 3, and 4 denote the PC plate, the window-frame shaped double-sided pressure-sensitive adhesive sheet, the acrylic plate, and the through hole of the PC plate, respectively.

The samples were each set in a universal tensile and compression testing machine (tensile and compression testing machine TG-1kN supplied by Minebea Co., Ltd). A round rod 21 (diameter: 10 mm) was passed through the through hole 4 of the PC plate 1 and the acrylic plate 3 was pressed by the round rod 21 in a condition of 10 mm/min. The maximum stress among stresses measured since the pressure was applied to the sample until the PC plate 1 and the acrylic plate 3 were separated was defined as a push-out adhesive force. The measurement was performed at a normal temperature (23°C). The measurement results are indicated in Table 1 below.

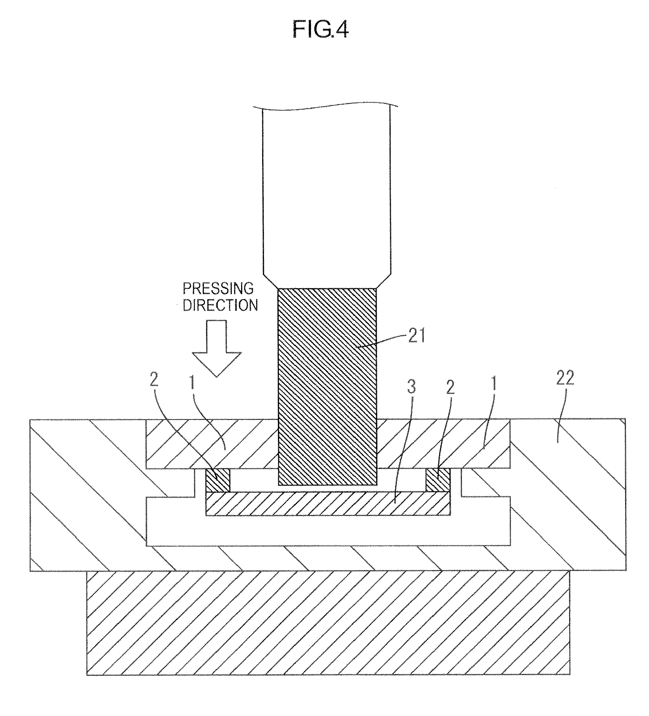

A method of measuring push-out adhesive forces is schematically illustrated in FIG. 4. In FIG. 4, reference numerals 1, 2, 3, 21, and 22 denote the PC plate, the window-frame shaped double-sided pressure-sensitive adhesive sheet, the acrylic plate, the round rod, and a stage, respectively. The sample was fixed to the stage 22 of a tensile and compression testing machine and the acrylic plate 3 of the sample was pressed by the round rod 21 that was passed through the through hole 4 of the PC plate 1. The PC plate 1 of the sample was not warped or broken when the acrylic plate 3 was pressed and a load was applied.

Evaluation 2: Impactproof Reliability at Normal Temperature

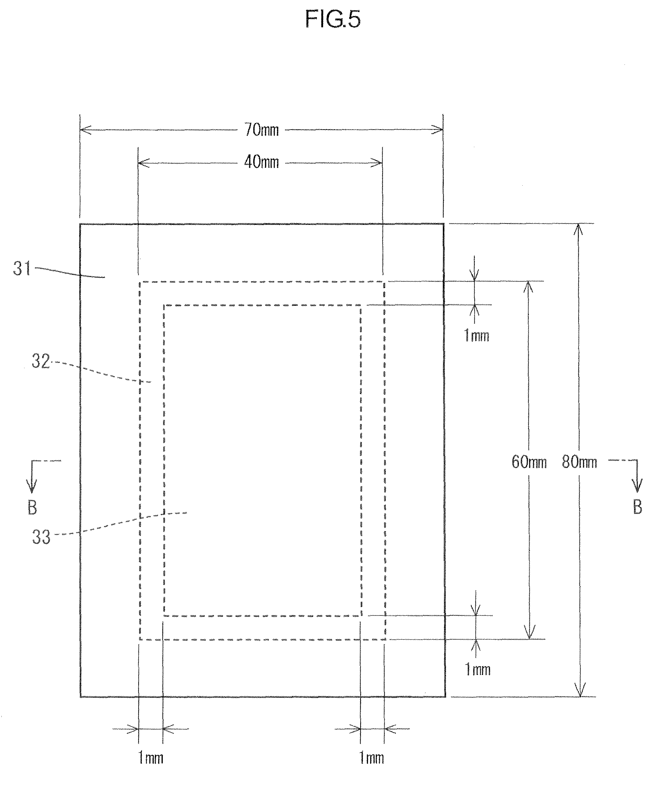

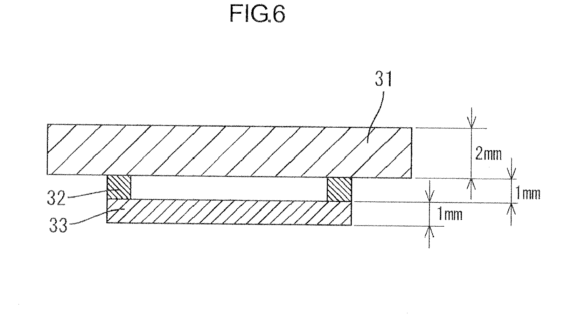

A schematic view (top view) of a sample used for an evaluation of impactproof reliability is illustrated in FIG. 5. Each of the prepared double-sided pressure-sensitive adhesive sheets was cut into a window-frame-like shape (a frame-like shape) with a width of 1 mm in a size of 40-mm wide by 60-mm height as illustrated in FIG. 5. A window-frame shaped double-sided pressure-sensitive adhesive sheet was prepared. An acrylic plate (acrylic lens, width: 40 mm, height: 60 mm, thickness: 1 mm) and a polycarbonate plate (PC plate, width: 70 mm, height: 80 mm, thickness: 2 mm) were bonded together with a window-frame shaped double-sided pressure-sensitive adhesive sheet. The acrylic plate and the PC plate were pressure-bonded in a condition that a roller moves back and forth for one time while applying a predetermined pressing force (2 kg). The sample for evaluation was prepared. A cross-sectional view of the sample cut along line B-B in FIG. 5 is illustrated in FIG. 6. In FIGS. 5 and 6, reference numerals 31, 32, and 33 denote the PC plate, the window-frame shaped double-sided pressure-sensitive adhesive sheet, and the acrylic plate (acrylic lens), respectively.

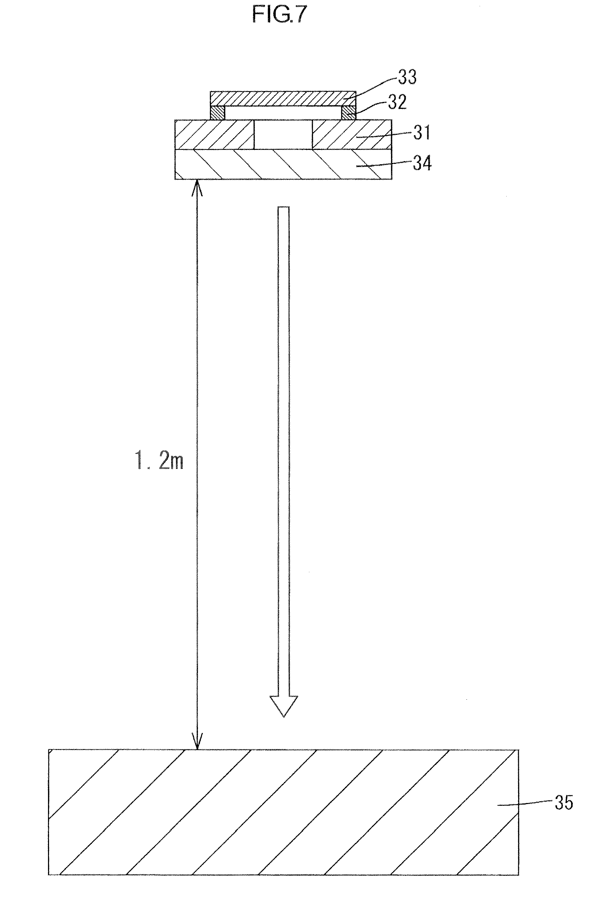

A method of measuring impactproof reliability is schematically illustrated in FIG. 7. A weight 34 was attached to each of the prepared samples such that a total weight of each sample was 110 g. The sample was dropped to free fall from 1.2 m above a concrete board 35 and the impactproof reliability of the sample was evaluated. The evaluation was made based on a condition of the sample after dropped 18 times to free fall at a normal temperature (23°C).

The sample was dropped 6 times as follow. The sample was dropped with a plate surface of the polycarbonate plate 31 on the weight 34 side facing down at the first time. The sample was dropped with a plate surface of the polycarbonate plate 31 on the acrylic plate 33 side facing down at the second time. The sample was dropped with one of short side surfaces of the polycarbonate plate 31 facing down at the third time. The sample was dropped with the other short side surface of the polycarbonate plate 31 facing down at the fourth time. The sample was dropped with one of long side surfaces of the polycarbonate plate 31 facing down at the fifth time. The sample was dropped with the other long side surface of the polycarbonate plate 31 facing down at the sixth time. The above series was performed three times and evaluations of the impactproof reliability were made after five series of dropping were performed. Evaluation Standards are as flows. The evaluations are indicated in Table 1 below.

Evaluation Standards

Good: Lifting of the acrylic plate was not observed and the acrylic plate remained attached after the sample was dropped to free fall 18 times at a normal temperature.

Bad: Lifting of the acrylic plate was observed after the sample was dropped to free fall at a normal temperature.

Table 1

| | PRESSURE-SENSITIVE ADHESIVE COMPOSITION | | | EVALUATION 1 | EVALUATION 2 |
|---|---|---|---|---|---|
| | SYRUP (PARTS BY MASS) | GLASS BALLOON (PARTS BY MASS) | POLYMER (B) (PARTS BY MASS) | PUSH-OUT ADHESIVE FORCE (N/cm$^2$) | IMPACTPROOF RELIABILITY (NORMAL TEMPERATURE) |
| EXAMPLE 1 | 100 | 9 | 10 | 31. 4 | GOOD |
| EXAMPLE 2 | 100 | 9 | 20 | 33. 5 | GOOD |
| EXAMPLE 3 | 100 | 9 | 30 | 36. 3 | GOOD |
| EXAMPLE 4 | 100 | 9 | 40 | 31. 5 | GOOD |
| COMPARATIVE EXAMPLE 1 | 100 | 9 | 0 | 25. 1 | GOOD |

Results

With respect to the evaluation 1, each double-sided pressure-sensitive adhesive sheet of Examples 1 to 4 includes the pressure-sensitive adhesive layer containing the polymer (B). As indicated in Table 1, the double-sided pressure-sensitive adhesive sheets of Examples 1 to 4 each have the push-out adhesive force of equal to or larger than 30.0 N/cm$^2$. Compared to this, the double-sided pressure-sensitive adhesive sheet of Comparative Example 1 includes the pressure-sensitive adhesive layer containing no polymer (B). Thus, the double-sided pressure-sensitive adhesive sheet of Comparative Example 1 has the push-out adhesive force (25.1 N/cm$^2$) that is lower than those of the Examples.

With respect to the evaluation 2, as illustrated in Table 1, the evaluations of each double-sided pressure-sensitive adhesive sheet of Examples 1 to 4 are good. That is, each double-sided pressure-sensitive adhesive sheet of Examples 1 to 4 has high impactproof reliability. The evaluation of the double-sided pressure-sensitive adhesive sheet of Comparative Example 1 is good like Examples.

Content of Bubbles

The contents of bubbles in the pressure-sensitive adhesive layers of the double-sided pressure-sensitive adhesive sheets of Examples 1 to 4 and Comparative Example 1 were all 1% by volume or lower.

**Claims**

1.   A double-sided pressure-sensitive adhesive sheet comprising a pressure-sensitive adhesive layer, the pressure-sensitive adhesive layer being substantially free of bubbles and comprising:

   an acrylic polymer (A);
   an acrylic polymer (B) having a weight-average molecular weight of equal to or more than 1,000 and less than 30,000; and
   hollow microspheres (C).

2.   The double-sided pressure-sensitive adhesive sheet according to claim 1, wherein the pressure-sensitive adhesive layer includes the acrylic polymer (B) in an amount of 5 to 50 parts by mass, based on 100 parts by mass of the acrylic polymer (A).

3.   The double-sided pressure-sensitive adhesive sheet according to claim 1 or 2, wherein the pressure-sensitive adhesive layer includes the hollow microspheres (C) in an amount of 0.1 to 15 parts by mass, based on 100 parts by mass of the acrylic polymer (A).

4.   The double-sided pressure-sensitive adhesive sheet according to any one of claims 1 to 3, wherein the acrylic polymer (B) includes (meth)acrylic acid ester (b1) as a monomer component.

5.   The double-sided pressure-sensitive adhesive sheet according to any one of claims 1 to 4, wherein the acrylic polymer (A) includes (meth)acrylic acid alkyl ester (a1) and a polar group-containing copolymerizable monomer (a2) with polymerizable unsaturated double bond as monomer components, the (meth)acrylic acid alkyl ester (a1) including any one of a linear-chain alkyl group with a carbon number of 1 to 20 and a branched-chain alkyl group with a carbon number of 1 to 20.

6. The double-sided pressure-sensitive adhesive sheet according to any one of claims 1 to 5, wherein the pressure-sensitive adhesive layer has a content of bubbles equal to or less than 3% by volume.

7. The double-sided pressure-sensitive adhesive sheet according to any one of claims 1 to 6, wherein the pressure-sensitive adhesive layer has a thickness of 90 $\mu$m to 3,000 $\mu$m.

8. The double-sided pressure-sensitive adhesive sheet according to any one of claims 1 to 7, wherein the double-sided pressure-sensitive adhesive sheet has a push-out adhesive force equal to or larger than 30 N/cm$^2$.

FIG.1

# FIG.2

FIG.3

FIG.4

PRESSING
DIRECTION

21

2  1    3  2  1    22

# FIG.5

FIG.6

## FIG.7

1.2m

**EUROPEAN SEARCH REPORT**

Europäisches
Patentamt
European
Patent Office
Office européen
des brevets

Application Number

EP 13 18 2956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 186 867 A1 (NITTO DENKO CORP [JP]) 19 May 2010 (2010-05-19) | 1-5,7 | INV. C09J7/02 |
| A | * abstract; claims 1-7 * * paragraphs [0022], [0037] * | 6,8 | C09J133/08 C08K7/22 |
| X | EP 2 228 418 A1 (NITTO DENKO CORP [JP]) 15 September 2010 (2010-09-15) | 1 | |
| A | * abstract; claims 1-5 * | 2-5 | |
| X | EP 2 228 419 A1 (NITTO DENKO CORP [JP]) 15 September 2010 (2010-09-15) | 1 | |
| A | * abstract; claims 1-4 * | 2-4 | |
| X | EP 2 395 063 A2 (NITTO DENKO CORP [JP]) 14 December 2011 (2011-12-14) | 1 | |
| A | * abstract; claims 1-6 * | 2-5 | |
| Y | EP 2 194 106 A1 (NITTO DENKO CORP [JP]) 9 June 2010 (2010-06-09) * abstract; claims 1-3 * | 1-5 | |
| Y | EP 2 371 915 A1 (NITTO DENKO CORP [JP]) 5 October 2011 (2011-10-05) * abstract; claims 1-5 * | 1-5 | **TECHNICAL FIELDS SEARCHED (IPC)** C09J C08K C08L |
| Y | EP 2 256 174 A1 (NITTO DENKO CORP [JP]) 1 December 2010 (2010-12-01) * the whole document * | 1-5 | |
| A | EP 2 479 229 A1 (NITTO DENKO CORP [JP]) 25 July 2012 (2012-07-25) * the whole document * | 1-5 | |
| X,P | WO 2013/085066 A1 (NITTO DENKO CORP [JP]) 13 June 2013 (2013-06-13) * the whole document * | 1-8 | |

The present search report has been drawn up for all claims

| Place of search | Date of completion of the search | Examiner |
|---|---|---|
| The Hague | 23 October 2013 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 13 18 2956

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2013

| Patent document cited in search report | | Publication date | Patent family member(s) | | Publication date |
|---|---|---|---|---|---|
| EP 2186867 | A1 | 19-05-2010 | CN | 101735737 A | 16-06-2010 |
| | | | EP | 2186867 A1 | 19-05-2010 |
| | | | JP | 2010116479 A | 27-05-2010 |
| | | | US | 2010119803 A1 | 13-05-2010 |
| EP 2228418 | A1 | 15-09-2010 | CN | 101831252 A | 15-09-2010 |
| | | | EP | 2228418 A1 | 15-09-2010 |
| | | | JP | 2010209263 A | 24-09-2010 |
| | | | US | 2010233467 A1 | 16-09-2010 |
| EP 2228419 | A1 | 15-09-2010 | CN | 101831251 A | 15-09-2010 |
| | | | EP | 2228419 A1 | 15-09-2010 |
| | | | JP | 2010209261 A | 24-09-2010 |
| | | | US | 2010233466 A1 | 16-09-2010 |
| EP 2395063 | A2 | 14-12-2011 | CN | 102220096 A | 19-10-2011 |
| | | | EP | 2395063 A2 | 14-12-2011 |
| | | | JP | 2011231319 A | 17-11-2011 |
| | | | KR | 20110113584 A | 17-10-2011 |
| | | | US | 2011250446 A1 | 13-10-2011 |
| EP 2194106 | A1 | 09-06-2010 | CN | 101747848 A | 23-06-2010 |
| | | | CN | 102224211 A | 19-10-2011 |
| | | | EP | 2194106 A1 | 09-06-2010 |
| | | | EP | 2371916 A1 | 05-10-2011 |
| | | | US | 2010143711 A1 | 10-06-2010 |
| | | | US | 2011223394 A1 | 15-09-2011 |
| | | | WO | 2010064358 A1 | 10-06-2010 |
| EP 2371915 | A1 | 05-10-2011 | CN | 102239226 A | 09-11-2011 |
| | | | EP | 2371915 A1 | 05-10-2011 |
| | | | JP | 2010132745 A | 17-06-2010 |
| | | | KR | 20110091531 A | 11-08-2011 |
| | | | US | 2011244230 A1 | 06-10-2011 |
| | | | WO | 2010064378 A1 | 10-06-2010 |
| EP 2256174 | A1 | 01-12-2010 | CN | 101978014 A | 16-02-2011 |
| | | | EP | 2256174 A1 | 01-12-2010 |
| | | | JP | 2009256607 A | 05-11-2009 |
| | | | US | 2011070434 A1 | 24-03-2011 |
| | | | WO | 2009116504 A1 | 24-09-2009 |
| EP 2479229 | A1 | 25-07-2012 | CN | 102498183 A | 13-06-2012 |
| | | | EP | 2479229 A1 | 25-07-2012 |
| | | | JP | 2011084732 A | 28-04-2011 |
| | | | KR | 20120073231 A | 04-07-2012 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 13 18 2956

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2013

| Patent document cited in search report | Publication date | Patent family member(s) | | Publication date |
|---|---|---|---|---|
| | | US | 2012177901 A1 | 12-07-2012 |
| | | WO | 2011033736 A1 | 24-03-2011 |
| WO 2013085066    A1 | 13-06-2013 | JP | 2013121990 A | 20-06-2013 |
| | | WO | 2013085066 A1 | 13-06-2013 |

EPO FORM P0459

For more details about this annex : see Official Journal of the European Patent Office, No. 12/82

**EP 2 706 101 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009108314 A
- JP 2005187513 A
- JP 2007051271 A

**Non-patent literature cited in the description**

- Polymer Handbook. John Wiley & Sons, Inc, 1989